# EUROPEAN PATENT APPLICATION

(11) **EP 4 242 450 A1**
(43) Date of publication of application: **13.09.2023**
(21) Application number: 22161089.2
(22) Date of filing: 09.03.2022
(51) Int. Cl.: F03D 7/02

(54) **ROTOR PLANE MONITORING SYSTEM**

(71) Applicant: Siemens Gamesa Renewable Energy A/S, 7330 Brande (DK)
(72) Inventor: Nieuwenhuizen, Johannes Mathias Hubertus, 8700 Horsens (DK)
(74) Representative: SGRE-Association

(57) **Abstract**

The invention describes a rotor plane monitoring system (1) of a wind turbine (2), comprising a single receiver unit (10) configured to decode positioning signals (10ᵢₙ) originating from a satellite navigation system; an antenna assembly configured to detect radio-frequency signals at a plurality of distinct detection nodes (N1, ..., Nn) on the wind turbine (2) and to relay detected signals (10ᵢₙ) to the receiver unit (10); a signal processing module (13) configured to compute a direction vector (V₁₂, ..., V_{45;} V₅₄, ..., V₂₁) from the signals (10ᵢₙ) relayed to the receiver unit (10); and an evaluation module (14) configured to determine the rotor plane orientation from the direction vector (V₁₂, ..., V_{45;} V_{S4}, ..., V₂₁). The invention further describes a wind turbine (2) comprising such a rotor plane monitoring system (1); and a method of monitoring the orientation of a wind turbine rotor plane.

## Description

### Background

To operate a wind turbine efficiently, it is necessary to align the rotor axis (about which the rotor blades turn) correctly into the wind. The most common type of wind turbine uses the "horizontal-axis" design, with the rotor blades mounted to a hub at the front of a nacelle, which in turn is mounted at the top of a tower. A yaw system at the junction between tower and nacelle allows the nacelle to be turned with the aim of pointing the hub into the wind. In most prior art control methods, the yaw system is operated on the basis of wind direction measurements and some means of establishing the actual orientation of the hub relative to the wind direction. Ideally, the hub is always aligned directly into the wind, i.e. with negligible yaw error, and follows any change in wind direction. With the rotor plane in correct alignment, the wind energy can be harvested optimally, and loading of the rotor blades can be minimized.

In one approach to rotor plane alignment, wind direction can be measured by a meteorological station in the vicinity of a wind turbine, and pressure sensors at the front the hub can be used to detect a misalignment relative to the measured wind direction. However, the accuracy of such methods may be compromised by local turbulence caused by the rotating rotor blades. In an alternative approach, a number of position sensors can be mounted to the exterior of the wind turbine, each capable of detecting line-of-sight radio-frequency signals from a global navigation satellite system (GNSS), in order to determine the spatial alignment of the wind turbine. For example, an array of receivers can be disposed in the rotor blades to directly establish the orientation of the rotor plane. However, arranging electrical devices in the rotor blades can lead to problems such as flashover in the event of a lightning strike. Alternatively, an array of receivers can be disposed on the exterior of the nacelle to directly establish the spatial position of the nacelle, from which the rotor plane orientation can be deduced. One drawback of these systems is the significant cost of mounting multiple such receivers to the wind turbine. Furthermore, the accuracy of these systems may be compromised by errors arising from ionospheric distortion, tropospheric distortion, errors in satellite position ephemeris data, clock drift, multipath propagation etc. Therefore, even when equipped with multiple costly GNSS receivers, it may not always be possible to correctly determine the wind turbine's spatial orientation, and as a result the rotor plane may be incorrectly aligned into the wind. Unfavourable loading of the wind turbine's structural components may result, and the incorrect alignment means that wind energy is not optimally harvested, i.e. revenue from export power is sacrificed.

It is therefore an object of the invention to provide an improved way of determining spatial alignment of a wind turbine.

This object is achieved by the claimed rotor plane monitoring system, by the claimed wind turbine, and by the claimed method of determining the orientation of a wind turbine rotor plane.

### Description

According to the invention, the rotor plane monitoring system comprises a single receiver unit configured to decode positioning signals or GNSS signals broadcast by satellites of a satellite navigation system. The inventive rotor plane monitoring system further comprises an antenna assembly configured to detect radio-frequency signals at a plurality of distinct detection nodes on the wind turbine and to relay detected signals to the receiver unit. A signal processing module is configured to compute a direction vector from the signals relayed to the receiver unit; and an evaluation module is configured to determine the rotor plane orientation from the direction vector.

A "direction vector" computed by the signal processing module shall be understood as a vector in space which describes the path along which - from the point of view of the receiver - the source of the received signals appears to move. Here, any signal arriving at the receiver has been picked up at a detection node, so a "direction vector" can be regarded as a vector passing through two or more detection nodes. With the direction vector and the known position of the detection nodes on the wind turbine, it is possible for the evaluation module to deduce the rotor plane orientation.

In the context of the invention, a detection node shall be understood as a point on the wind turbine at which a positioning signal is sensed or detected, i.e. from the point of view of the receiver unit, a positioning signal appears to be sensed at a detection node. A detection node is separate from the receiver unit. A detection node may also be separate from the antenna assembly, as will be explained in the following.

An advantage of the inventive rotor plane monitoring system is that is makes it possible to determine the rotor plane orientation at relatively low cost, since it requires only a single receiver unit.

According to the invention, the wind turbine comprises a yaw system between a nacelle and a tower; an embodiment of the inventive rotor plane monitoring system; and a wind turbine controller configured to receive a wind vector and to control the yaw system on the basis of the wind vector and the rotor plane orientation determined by the rotor plane monitoring system.

According to the invention, the method of monitoring the orientation of a wind turbine rotor plane comprises the steps of equipping a wind turbine with a single receiver unit configured to decode positioning signals broadcast by a satellite navigation system; allocating a plurality of distinct detection nodes on the wind turbine; equipping the wind turbine with an antenna assembly configured to detect radio-frequency signals at a detection node and to relay detected signals to the receiver unit; computing a direction vector from the signals relayed to the receiver unit; and determining the rotor plane orientation from the direction vector.

The inventive method allows a favourably accurate estimate of the rotor plane orientation to be determined at any time. With the inventive method, large numbers of wind turbines can be monitored for rotor plane alignment at relatively low cost, since it is only necessary to provide a single receiver unit for each wind turbine.

The object of the invention is also achieved by a computer program product with a computer program that is directly loadable into the memory of a control unit of the wind turbine, and which comprises program units to perform the steps of the inventive method when the program is executed by the control unit.

Particularly advantageous embodiments and features of the invention are given by the dependent claims, as revealed in the following description. Features of different claim categories may be combined as appropriate to give further embodiments not described herein.

The invention can be adapted to any suitable satellite navigation system such as Galileo, GPS, GLONASS, BeiDou etc. Any such GNSS comprises many mid-earth orbit (MEO) and/or geostationary satellites that each transmit ephemeris and clock signals. A GNSS receiver can "see" multiple such satellites at any one time, and receives the ephemeris and clock signal from each satellite in its line-of-sight. With this information, the GNSS receiver can estimate its own geographical coordinates. The expressions "receiver", "receiver unit" and "GNSS receiver" shall be understood to be synonyms and may be used interchangeably herein. The expressions "rotor plane monitoring system" and "monitoring system" may be used interchangeably.

In the following, without restricting the invention in any way, the wind turbine may be assumed to be a horizontal-axis wind turbine with - usually - three rotor blades mounted to the hub at the front end of a nacelle. The expression "an aerodynamic rotor" refers to the rotor blades and hub, since these turn as a single unit. The plane containing the disc swept by the aerodynamic rotor as it turns is generally referred to as the rotor plane, and the rotational axis of the wind turbine is at the centre of this plane. To maximize the efficiency of the wind turbine, it is necessary for the rotor plane to face directly into the wind, i.e. to align the rotational axis and the wind vector. Any discrepancy between the alignment of rotational axis and wind vector is referred to as the yaw error. The controller of a wind turbine generally strives to keep the yaw error to a minimum.

An antenna module or detection node can be placed anywhere on the wind turbine, preferably at an exposed face on the exterior with an at least mostly unobstructed line-of-sight to the sky. An arrangement of antenna modules and detection nodes can be mounted on the nacelle, the hub, one or more rotor blades, etc. In the following, a part carrying antenna modules and detection nodes is referred to as a "tracked body" or "tracked part". For example, one arrangement of antenna modules and detection nodes can be provided for the nacelle, so that the nacelle can be regarded as a "tracked body". Alternatively or in addition, an arrangement of antenna modules and detection nodes can be provided for the aerodynamic rotor, which is then regarded as a "tracked body". Each tracked body can be equipped with a receiver unit, i.e. one instance of the inventive monitoring system is provided for each tracked body. In a preferred embodiment of the invention, a single instance of the inventive monitoring system is provided. The orientation of each tracked body can be determined by selectively receiving signals from the antenna modules and detection nodes of that tracked body.

In the following, it may be assumed that an antenna module is constructed to detect or "pick up" radio-frequency signals in an appropriate frequency band. In a preferred embodiment of the invention, an antenna module comprises an antenna tuned to the L1 carrier frequency.

As indicated above, a received positioning signal appears - from the point of view of the receiver - to be sensed at a detection node. The antenna assembly allows each detection node to relay received positioning signals to the receiver unit. The invention is based on the insight that by controlling the manner in which signals from the detection nodes are relayed to the receiver unit, the positioning signals can appear to be detected by a moving antenna. It follows that the receiver unit effectively behaves as a "moving GNSS receiver".

In one preferred embodiment of the invention, the monitoring system comprises a switching unit that is configured to connect any one of the detection nodes with the receiver unit. The switching unit can be realised as a multiplexer, for example, and can connect a selected detection node with the receiver unit so that the receiver unit can "read" the signals sensed at the selected detection node.

In one exemplary realisation of the inventive monitoring system, the switching unit can comprise a configuration of relays. Each relay can connect a detection node to the receiver unit, and the relays can be switched according to the node switching sequence.

However, in a particularly preferred embodiment of the invention, the switching unit comprises a plurality of PIN diodes, and each PIN diode is connected between a detection node and the receiver unit. The characteristics of a PIN diode (wide intrinsic region, high level injection, rapid transport of charge carriers, high-frequency resistance etc.) make it superior to a relay. The very high switching speed of a PIN diode makes it suitable for use with radio-frequency signals such as GNSS signals.

In a further preferred embodiment of the invention, each PIN diode is configured as a variable attenuator. This configuration allows the PIN diodes to be controlled in such a way that a signal received at the receiver unit appears to originate from a moving sensor. From the received signals, the evaluation module can very quickly determine the motion vector of the "moving sensor" or "virtual moving sensor". From this motion vector and knowledge of the wind turbine geometry, the evaluation module can then deduce the orientation in space of the tracked bod, which can be any of the nacelle, the hub, a rotor blade, etc.

In a particularly preferred embodiment of the invention, each detection node is defined by its position in a local coordinate system or reference frame of the wind turbine. This local coordinate system can undergo translation and/or rotation relative to a stationary coordinate system, for example when the nacelle turns during a yaw manoeuvre, when the aerodynamic rotor is turning, when the tower oscillates, etc. The local coordinate system of the wind turbine can be a Cartesian coordinate system with three orthogonal axes. Similarly, the stationary coordinate system can be a Cartesian coordinate system with three orthogonal axes. The coordinates of each detection node in the local reference frame are known to the rotor plane monitoring system. In such an embodiment, the evaluation module is configured to determine the rotor plane orientation from the direction vector and the spatial coordinates of the detection nodes.

In a further preferred embodiment of the invention, a "virtual direction vector" can be deduced from the received signals. In this case, the actual spatial positions of the detection nodes are not regarded as relevant, and the evaluation module does not require knowledge of the actual geometry of the tracked object. It is enough for the evaluation module to be given position information about the detection nodes, i.e. to know how the detection nodes are arranged relative to a known parameter. For example, the evaluation module may know that a row of detection nodes is arranged on top of the nacelle, parallel to the rotation axis of the wind turbine; that a row of detection nodes is arranged about a circumference of the hub; that a row of detection nodes is arranged along a longitudinal axis of a rotor blade; etc. With such information, the wind turbine controller can then estimate the rotor plane alignment from the virtual direction vector.

In a preferred embodiment of the invention, the monitoring system comprises a sequencing module configured to control the switching unit according to a node switching sequence. The node switching sequence determines the order in which the detection nodes are to be selected, and the intervening time intervals or switching rate. The monitoring system can therefore "scan" the detection nodes in any suitable order and at any suitable rate. The sequencing module may therefore be regarded as a "scan sequencer".

In one preferred embodiment of the invention, the monitoring system comprises a plurality of antenna modules, wherein each antenna module is mounted to a specific detection node. In such a realisation, the antenna of an antenna module is a detection node in the context of the invention. For example, five or more antenna modules may be disposed on the roof of the wind turbine nacelle. The antenna modules are preferably arranged to cover the maximum possible extent, for example in a linear arrangement of evenly spaced antenna modules, from one corner of the nacelle roof to the diagonally opposite corner. A node switching sequence of the sequencing module allows the antennas to be scanned in any suitable order and at any suitable rate.

Alternatively or in addition, the inventive monitoring system may comprise at least one antenna module disposed on each of a plurality of rotor blades and/or at least one antenna module disposed on the hub of the wind turbine.

In a further possible realisation of the invention, the monitoring system may comprise multiple detection nodes but only a single antenna module. In such an embodiment, the single antenna module can be mobile and can be controlled to pass over a detection node, making electrical contact to that detection node. For example, in a preferred embodiment of the invention, the monitoring system can comprise a track mounted on an exterior surface of the wind turbine, with detection nodes disposed at suitable points along the track. The single antenna module is moveably mounted on the track, and the monitoring system further comprises some means of displacing or actuating the movable antenna module according to a switching sequence. With this arrangement, if a detection node is "active" (i.e. currently selected by the sequencing module) when contacted by the moving antenna module, the signals sensed by the antenna are relayed to the receiver.

Radio-frequency signals can be passed from a detection node to the receiver unit in any suitable manner. For example, a wired connection may extend from a detection node via the switching unit to an input of the receiver unit.

GNSS signals can allow favourably accurate positioning. However, various sources of error (ionospheric distortion, tropospheric distortion, errors in satellite position ephemeris data, clock drift, etc.) can lead to differences between the computed position of a tracked body and the actual position of the tracked body. For an application such as wind turbine rotor plane alignment, the differences may be significant and may lead to undesirable yaw errors. Therefore, in a particularly preferred embodiment of the invention, the monitoring system is configured to correct the received positioning signals by correction signals received from a ground-based transmitter. For example, the monitoring system can be configured to receive digital correction signals from a real-time kinematic positioning (RTK) service or a ground-based augmentation system (GBAS) such as differential GPS. Such correction signals can identify the difference between positions indicated by the GNSS and known fixed positions. The correction signals can be broadcast by a nearby short-range ground-based transmitter provided by a DGPS service, or by a fixed base station when RTK is applied. With such digital correction signals, the accuracy of the inventive monitoring system can be improved even further, and the position of a tracked body can be determined to an accuracy of only a few centimetres.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 is a simplified block diagram of an exemplary embodiment of the inventive rotor plane monitoring system;
Figures 2 - 3 show an exemplary embodiment of the inventive wind turbine;
Figures 4 - 6 illustrate the inventive method;
Figures 7 and 8 show a prior art wind turbine.

In the diagrams, like numbers refer to like objects throughout. Objects in the diagrams are not necessarily drawn to scale.

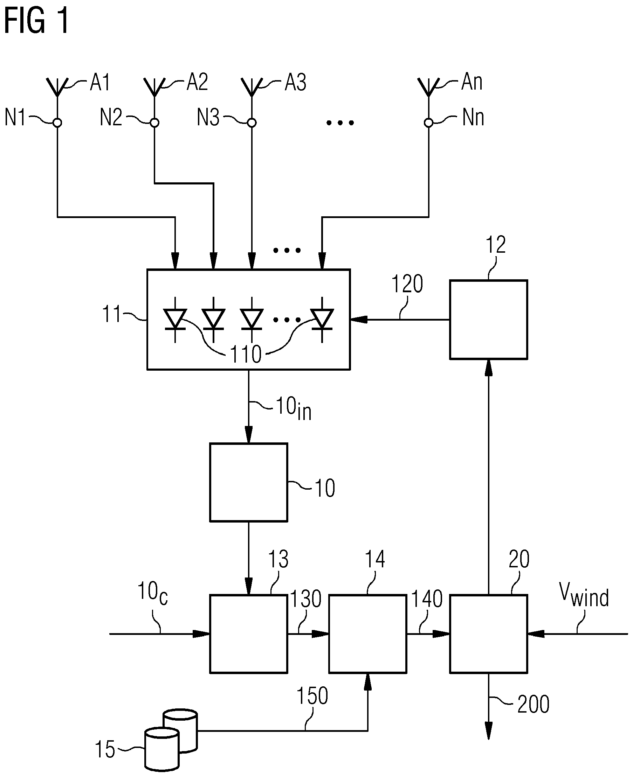

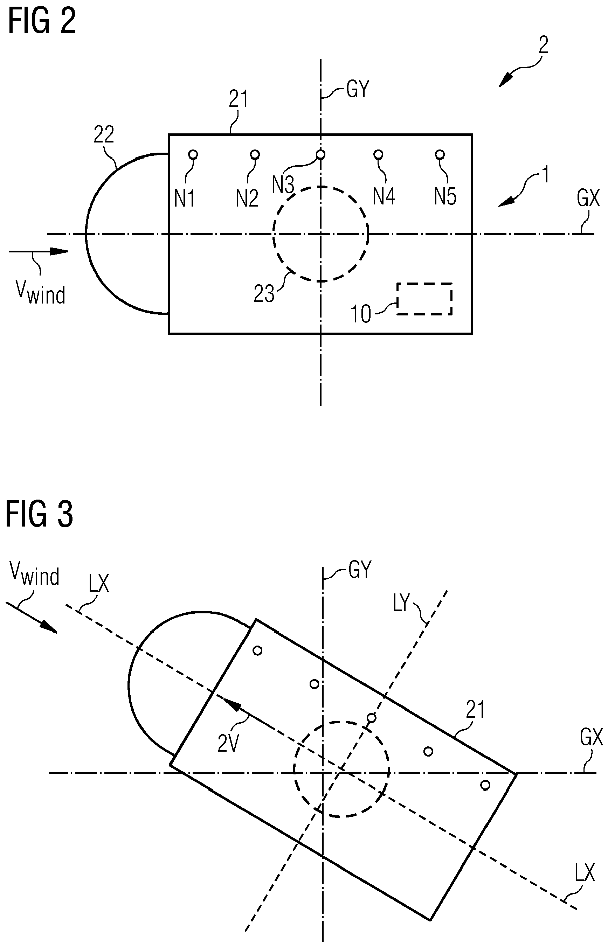

Figure 1 is a simplified block diagram of an exemplary embodiment of the inventive rotor plane monitoring system 1, and Figures 2 - 3 illustrate a possible realisation. The diagrams show detection nodes N1 - Nn, which can be mounted at any suitable locations on moving parts of the wind turbine, for example on the roof of the nacelle as shown here, so that good reception for GNSS signals is ensured. In this embodiment, the antenna assembly comprises a corresponding number of antennas A1 - An, each connected to a detection node N1 - Nn. Each antenna A1 - An is designed to be able to detect GNSS radio-frequency signals. The diagram shows a single receiver unit 10 which can decode GNSS signals 10ᵢₙ originating from a satellite navigation system. Here, a switching unit 11 connects any one of the detection nodes N1 - Nn to the receiver 10 at any one time. In this exemplary embodiment, the switches are realized by PIN diodes 110. In addition to the usual on/off diode functionality, the attenuation of each PIN diode 110 can be adjusted by appropriate control signals.

A sequencing module 12 determines the scan sequence and the switching rate. A scan sequence and switching rate can be predefined, or the wind turbine controller 20 can instruct the scan sequencer 12 as appropriate.

Here, control signals 120 from the scan sequencer 12 are collectively indicated as a group, and shall be understood to comprise suitable control signals that switch any combination of PIN diodes 110 according to the switching sequence, as well as controlling the attenuation of the PIN diodes to achieve a smooth transition or "hand over" from one detection node to the next detection node in the switching sequence. In this way, the inventive monitoring system emulates a single moving GNSS receiver.

As explained above, GNSS signals may not always be entirely accurate, and the inventive monitoring system may optionally be augmented by RTK or DGPS techniques. In this exemplary embodiment, the monitoring system 1 is configured to apply correction signals 10_{c} to the received positioning signals 10ᵢₙ. The correction signals 10_{c} may originate from a nearby ground-based transmitter, for example, whereby the term "ground-based" applies equally to a transmitter located on the mainland or at an offshore location. In the case of an offshore wind farm implementing the inventive method, each wind turbine with a rotor plane monitoring system can receive such correction signals 10_{c} via a local communication system of the wind farm, as will be known to the skilled person.

The diagram shows a signal processing module 13 which computes a direction vector 130 from the received (and corrected) signals. An evaluation module 14 can then determine the rotor plane orientation from the direction vector 130 and from knowledge of the positions of the detection nodes, in this case from information 150 stored in a memory 15.

Figure 2 shows a wind turbine 2 as viewed from above, and also indicates a global frame of reference, with orthogonal axes GX, GY defining a horizontal plane, and a third axis (not shown) extending vertically through the tower. Here, the tracked body is the nacelle 21, and a row of five detection nodes N1 - N5 is shown. In an arbitrarily chosen initial position (e.g. 0° yaw), axes of a local reference frame (two axes LX, LY are shown here in the plane of the page) align with the axes of the global frame of reference. In practice, the rotational axis of a wind turbine and therefore also the rotor plane may be tilted relative to the horizontal of the global frame of reference, but for the sake of discussion, it may be assumed that the axes of the local reference frame align with the axes of the global frame of reference in an initial position. Here, one axis LX of the local reference frame is the rotational axis of the wind turbine 2 and - in this initial position - aligns with the LY axis of the global frame of reference. The rotor plane of the wind turbine 2 is orthogonal to the rotational axis LX, and should (generally) align with the wind vector v_{wind}.

During operation of the wind turbine 2, the yaw system (indicated by ring 23 at the top of the tower underneath the nacelle 21) is controlled to turn the nacelle 21 so that the rotor plane faces into the wind. Figure 3 shows the wind turbine 2 after yawing through a certain range to follow a change in wind direction.

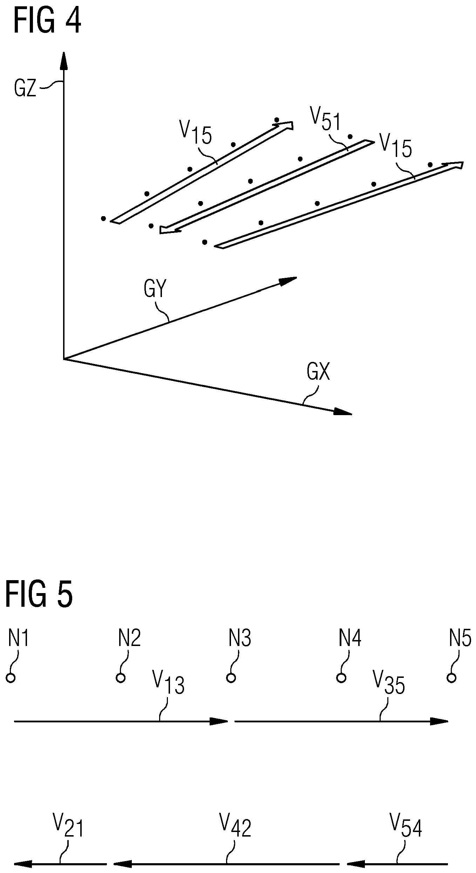

With the inventive monitoring system, the scan sequencer 12 selects the detection nodes at suitable order and at a suitable switching rate, and the receiver 10 receives a series of signals 10ᵢₙ that appear to come from a moving antenna (as well as digital correction signals 10_{c} if the method is augmented by RTK or DGPS as explained above). This is illustrated in Figure 4, which shows a series of detection node coordinates (indicated by dots) as computed by the signal processing module 13 and evaluation module 14, which in this case may be realised as a module of the wind turbine controller 20. From information stored in a suitable memory 15, the wind turbine controller 20 knows the position of each detection node N1 - N5 on the nacelle 21, i.e. the position of each detection node N1 - N5 in the local frame of reference (here, the detection nodes are assumed to be arranged in a straight line as shown in Figure 3). In one approach, a GNSS signal from a detection node N1 - N5 allows the evaluation module 14 to compute the position of that detection node at that instant in the global frame of reference. From a series of such coordinates, the wind turbine controller is then able to deduce a direction vector of the wind turbine 2 in the global frame of reference, and to continually update this direction vector as it receives new coordinates. The switching unit can be controlled to route the signals from each detection node in order, going back-and-forth, for example with a repeated switching sequence N1-N2-N3-N4-N5-N4-N3-N2-N1, so that direction vectors V₁₅, V₅₁, V₁₅ with opposite sign can be computed. With this approach, even very slight movements of the tracked body (in this case the nacelle) can be quickly identified. The momentary direction vector is continually compared to the wind vector v_{wind}, and the wind turbine controller 20 issues control signals 200 to the yaw system as appropriate to correct the rotor plane alignment. Because of the accuracy of the inventive method in computing the actual position in space of the tracked body, it is possible to continually correct the rotor plane alignment even to slight changes in wind direction v_{wind}, so that wind energy can be optimally harvested and wind turbine revenue can be maximized. Equally, the invention allows a wind turbine to be aligned at a specific angle relative to the wind vector in order to influence wake patterns in a wind park, for example. Figure 5 illustrates an alternative scanning sequence. Here, five detection nodes N1 - N5 are scanned and the received signals are evaluated to compute sub-direction vectors V₁₃, V₃₅ in one direction, and sub-direction vectors V₅₄, V₄₂, V₂₁ with opposing sign. Of course, any appropriate switching order can be chosen, for example depending on the tracked body, the number of detection nodes, the distance between detection nodes, etc.

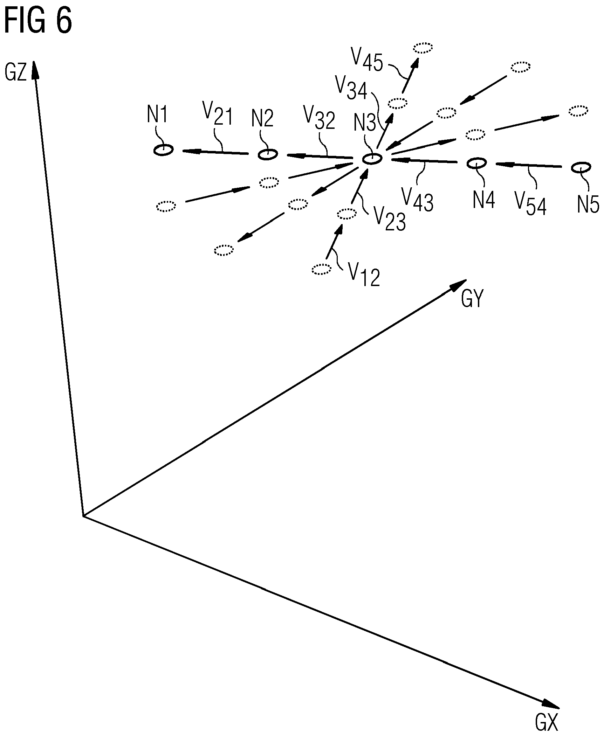

Figure 6 illustrates another advantage of the inventive method. Here, the tracked body is the nacelle, and five detection nodes N1 - N5 (or any suitable number) are arranged in a straight line on an outer surface, in this case on the roof of the nacelle. As the nacelle is yawed, each detection node describes an arc. For the sake of demonstration, the line of detection nodes is assumed to coincide with a diameter of the yaw ring, so that the middle node N3 remains "stationary" during yawing. Direction vectors are computed in opposing directions (sub-direction vectors V₁₂, ..., V₄₅ from node N1 to node N5, and sub-direction vectors V₅₄, ..., V₂₁ from node N5 to node N1). From the information collected in this manner, the evaluation unit can track the yawing motion in the global frame of reference.

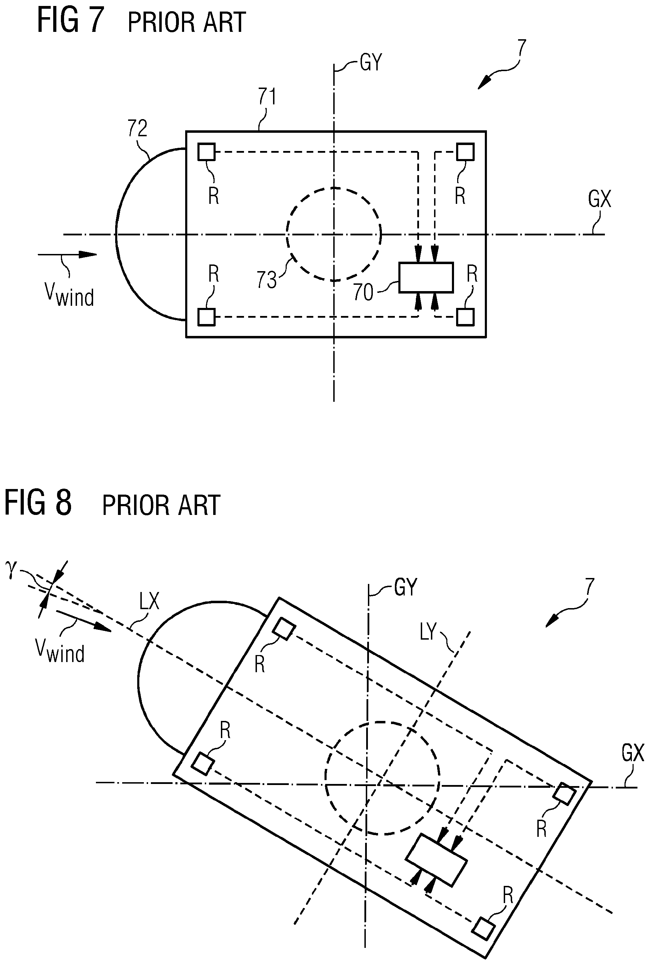

Figure 7 and Figure 8 illustrate a prior art alignment system. The diagram indicates a wind turbine 7 as viewed from above. Various receiver units can be disposed at the exterior of the nacelle 71 and/or hub 72 and/or rotor blades. Here, an arrangement of four receivers R is shown on the roof of the nacelle 71. The diagram indicates a global frame of reference, indicated here by orthogonal axes GX, GY, with the third axis extending vertically through the tower 73. In an arbitrarily chosen initial position (e.g. 0° yaw), axes LX, LY of a local reference frame align with the axes GX, GY of the global 3D frame of reference.

Each receiver unit R receives radio-frequency signals from satellites of a satellite navigation system and is configured to decode the received signals in order to compute its spatial position. Each receiver unit R reports its spatial position to the wind turbine controller 70. The actual geometry of the nacelle is known to the wind turbine controller 70, and the position of each receiver unit R relative to this geometry is also known. From this information, the wind turbine controller 70 computes the estimated alignment of the rotor plane. However, as explained above, multipath propagation can result in erroneous data being received by the receivers R, which in turn can result in incorrect estimation of the rotor plane alignment, leading to yaw error, indicated here by a yaw error angle γ. Furthermore, the need to dispose multiple receiver units R in various locations of the wind turbine adds to the overall cost of operating the wind turbine. Particularly in the case of a wind farm with many wind turbines, such costs can be prohibitive.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A rotor plane monitoring system (1) of a wind turbine (2), comprising
- a single receiver unit (10) configured to decode positioning signals (10ᵢₙ) originating from a satellite navigation system;
- an antenna assembly configured to detect radio-frequency signals at a plurality of distinct detection nodes (N1, ..., Nn) on the wind turbine (2) and to relay detected signals (10ᵢₙ) to the receiver unit (10);
- a signal processing module (13) configured to compute a direction vector (130; V₁₂, ..., V_{45;} V₅₄, ..., V₂₁) from the signals (10ᵢₙ) relayed to the receiver unit (10); and
- an evaluation module (14) configured to determine the rotor plane orientation from the direction vector (V₁₂, ..., V_{45;} V₅₄, ..., V₂₁).

2. A rotor plane monitoring system according to the preceding claim, wherein the evaluation module (14) is configured to determine the rotor plane orientation from the direction vector (V₁₂, ..., V_{45;} V₅₄, ..., V₂₁) and position information (150) of the detection nodes (N1, ..., Nn).

3. A rotor plane monitoring system according to any of the preceding claims, a switching unit (11) configured to connect any one of the detection nodes (N1, ..., Nn) with the receiver unit (10).

4. A rotor plane monitoring system according to any of the preceding claims, a sequencing module (12) configured to control the switching unit (11) according to a node switching sequence (120).

5. A rotor plane monitoring system according to any of the preceding claims, wherein a node switching sequence (120) specifies the order in which to select detection nodes (N1, ..., Nn) and a switching rate.

6. A rotor plane monitoring system according to any of the preceding claims, wherein the switching unit (11) comprises a plurality of PIN diodes (110), and wherein each PIN diode (110) is connected between a detection node (N1, ..., Nn) and the receiver unit (10).

7. A rotor plane monitoring system according to the preceding claim, wherein a PIN diode (110) is configured as a variable attenuator.

8. A rotor plane monitoring system according to any of the preceding claims, wherein an antenna module (A1, ..., An) comprises an antenna tuned to the L1 frequency.

9. A rotor plane monitoring system according to any of the preceding claims, wherein the antenna assembly comprises a plurality of antenna modules (A1, ..., An), and wherein each antenna module (A1, ..., An) is mounted to a specific detection node (N1, ..., Nn).

10. A rotor plane monitoring system according to any of the preceding claims, comprising at least one antenna module (A1, ..., An) disposed on each of a plurality of rotor blades and/or at least one antenna module (A1, ..., An) disposed on the hub (22) of the wind turbine (2).

11. A rotor plane monitoring system according to any of the preceding claims, configured to correct the received positioning signals (10ᵢₙ) by correction signals (10_{c}) received from a ground-based transmitter.

12. A wind turbine (2) comprising
- a yaw system (23) between a nacelle (21) and a tower;
- a rotor plane monitoring system (1) according to any of claims 1 to 11;
- a wind turbine controller (20) configured to receive a wind vector (v_{wind}) and to control the yaw system (23) on the basis of the wind vector (v_{wind}) and the rotor plane orientation computed by the rotor plane monitoring system (1) .

13. A method of monitoring the orientation of a wind turbine rotor plane, which method comprises steps of
- equipping a wind turbine (2) with a single receiver unit (10) configured to decode positioning signals (10ᵢₙ) broadcast by a satellite navigation system;
- allocating a plurality of distinct of detection nodes (N1, ..., Nn) on the wind turbine (2);
- equipping the wind turbine (2) with an antenna assembly (A1, ..., An) configured to detect radio-frequency signals at a detection node (N1, ..., Nn) and to relay detected signals (10ᵢₙ) to the receiver unit (10);
- computing the spatial coordinates (N_{xyz}) of each detection node (N1, ..., Nn) from the signals (10ᵢₙ) relayed to the receiver unit (10); and
- determining the rotor plane orientation from the spatial coordinates (N_{xyz}) of the detection nodes (N1, ..., Nn).

14. A method according to the preceding claim, comprising steps of compiling a node switching sequence (120) and relaying signals (10ᵢₙ) to the receiver unit (10) according to that node switching sequence (120).

15. A computer program product comprising a computer program that is directly loadable into a memory of a control unit (20) of the claimed wind turbine (2), and which comprises program elements for performing steps of the claimed method when the computer program is executed by the control unit.
